# EUROPÄISCHE PATENTANMELDUNG

(11) **EP 2 644 039 A1**
(43) Veröffentlichungstag der Anmeldung: **02.10.2013**
(21) Anmeldenummer: 13161500.7
(22) Anmeldetag: 27.03.2013
(51) Int. Cl.: A23L 1/221, B01D 11/02, C11B 9/02, B01D 11/00

(54) **Verfahren zur Gewinnung von Aromen aus Biomaterial**

(30) Priorität: 28.03.2012 DE 102012006145
(71) Anmelder: Rausche, Helmut, 21255 Dohren (DE)
(72) Erfinder: Rausche, Helmut, 21255 Dohren (DE)
(74) Vertreter: Müller Schupfner & Partner

(57) **Zusammenfassung**

Gegenstand der vorliegenden Erfindung ist ein Verfahren zur Gewinnung von Pflanzen-Inhaltsstoffen, kurz Aromen, in möglichst unveränderter Naturform aus Biomaterial durch Kondensation und/oder Absorption unter Verwendung eines Extraktors, eines Verdichters und einer oder mehrerer Drosselventile und eines Sammelraums.

## Beschreibung

Die vorliegende Erfindung betrifft ein Verfahren zur Gewinnung von Pflanzen-Inhaltsstoffen, kurz Aromen, in möglichst unveränderter Naturform aus Biomaterial durch Kondensation und/oder Absorption unter Verwendung eines Extraktors, eines Verdichters, einer oder mehrerer Drosselventile und eines Sammelraums.

Inhaltsstoffe aus Pflanzen in möglichst reiner Form zu extrahieren ist eine seit langem bekannte Anstrengung und hat insbesondere Bedeutung bei der Gewinnung von Duftstoffen in der Parfümindustrie, von Aromastoffen aus Pflanzen in der Lebensmittelindustrie oder Wirkstoffen in der Heilkunde.

Häufiges Problem der bekannten Methoden der Gewinnung von Pflanzen-Inhaltsstoffen ist, dass sich die zu isolierenden Substanzen nicht immer leicht von den pflanzlichen Rohstoffen trennen lassen und sich darüber hinaus, sobald sie unter den Bedingungen der Separation isoliert vorliegen, häufig relativ schnell verändern und gegebenenfalls an Qualität einbüßen. Derartige "Folgereaktionen", zu denen thermische Zersetzung, oxidativer und/oder durch Licht/Strahlung induzierter Abbau zählen, sind unerwünscht und schränken die Auswahl der zur Verfügung stehenden Verfahren ein.

Bei den bisher bekannten Extraktionsverfahren erfahren die Aromen sowie eventuell anfallende Hydrolate erhebliche Einbußen, sowohl quantitativ, ausgehend von der in der Pflanze vorhandenen bzw. produzierbaren Gesamtaromamenge, wie auch qualitativ, da das Aroma z.B. bei der Wasserdampfdestillation durch Hydrolyse, Esterspaltung und sogar durch ganze oder teilweise Zerstörung der Aromakomponenten eine unerwünschte Umsetzung erfährt.

Derzeit gibt es kein z.B. Jasmin-, Rosen- oder Quittenöl oder -aroma, das exakt das Aroma widerspiegelt, wie es an der lebenden Pflanze geruchlich oder geschmacklich wahrgenommen wird. Die bisher bekannten Extraktionsverfahren, wie Wasserdampfdestillation, Dampfdestillation, Extraktion mit Alkohol, Hexan oder anderen Lösungsmitteln und sogar die CO₂-Extraktion weisen einen gemeinsamen erheblichen Nachteil auf:

Bei allen herkömmlichen Extraktionen kann lediglich das zum Zeitpunkt des Extrahierens in dem Pflanzenmaterial vorhandene und nicht neu entwickeltes Aroma gewonnen werden, da die duft- oder aromaproduzierenden Zellorgane entweder der lebenden Pflanze oder des noch Duftstoff produzierenden Pflanzenmaterials, wie einer frisch gepflückten Duftrosenblüte, zerstört werden, in dem Augenblick, wo die Extraktion beginnt und der thermische Einfluss, der oxidative Einfluss oder der Einfluss eines Lösungsmittels oder häufig auch eine Kombination derselben anfängt zu wirken. Dieses gilt auch für die vor allem im 19. Jahrhundert in Frankreich vielgebrauchte Methode der Mazeration von Blüten in Öl. Ausschließlich die ebenso in Frankreich früher beliebte Enfleuragetechnik erlaubt den Blüten eine gewisse Fortproduktion der Duftstoffe während des Extraktionsprozesses. Doch diese Technik, die schon im alten Ägypten bekannt war, ist mit extrem hohem Einsatz an Handarbeit verbunden, da die Enfleuragerahmen auch defleuriert und regelmäßig mit neuen Blüten beschickt werden müssen.

Aus der US 5582694 A ist z.B. ein Verfahren zur Gewinnung von ätherischen Ölen aus Pflanzenmaterial durch Durchtreiben von erhitztem Wasserdampf unter Druck durch das Pflanzenmaterial unter Verdampfung der ätherischen Öle, Kondensieren des Gemisches aus Wasserdampf und gasförmigem Öl und Auffangen des Kondensats bekannt. In diesem Verfahren wird das PflanzenMaterial und damit auch dessen Inhaltsstoffe heißem Wasserdampf und damit hohen Temperaturen ausgesetzt. Dies kann zu Abbau bei empfindlichen Pflanzen-Inhaltstoffen führen. Der Hauptnachteil der Wasserdampfdestillation ist die zu hohe Extraktionstemperatur, doch auch das Fehlen einer Inertisierung hat einen schädlichen Einfluss auf das Extraktionsergebnis. Ein weiterer Nachteil ist, dass das kostbare Aroma der leicht flüchtigen Kopfnote häufig nicht aufgefangen werden kann und sich in der Raumluft verflüchtigt.

Relativ schwerflüchtige Öle, die z.B. aus Sandelholz oder Iriswurzel destilliert werden sollen, benötigen das Durchtreiben von Wasserdampf in Verbindung mit Hitze, um aufkonzentriert werden zu können. Vollkommen unerwartet war die im Zusammenhang mit der Erfindung gemachte Entdeckung, dass in vielen Fällen nicht das ätherische Öl, sondern das Biomaterial als solches eine große Anfälligkeit nicht nur gegenüber Hitze sondern auch gegenüber der bei der Wasserdampfdestillation entstehenden hohen Feuchtigkeit hat.

Bei dem Verfahren nach der JP 2000-053992 A wird nach wenigen Stunden die Duftproduktion z.B. von Blüten oder Blättern enorm beeinträchtigt. Es konnte nachgewiesen werden, dass Jasminblüten bereits nach 1-2 Stunden durch die Feuchtigkeit nur noch sehr eingeschränkt Duft abgeben. Weiterhin ist bei der ausschließlichen Verwendung von Inertgas ohne Wasserdampf der niedrigere Kondensationspunkt ein wesentlicher Nachteil für das Extraktionsergebnis.

Die Aufgabe der vorliegenden Erfindung ist es deshalb, ein Verfahren und eine dazugehörige Apparatur zu entwickeln, die die oben genannten Nachteile nicht aufweist, d.h. äußerst aromaschonend arbeitet, und deshalb die höchstmögliche Qualität von Aroma liefert. Doch auch quantitativ ist das neue Extraktionsverfahren von großem Vorteil, da es das ganze Aroma oder zumindest den größtmöglichen Teil des gewinnbaren Gesamtaromas liefert und kostengünstig ist. Der Erfindung lag somit die Aufgabe zugrunde, ein Verfahren zur Isolierung von Pflanzen-Inhaltsstoffen zu schaffen, mit dem aus frischen oder angewelkten Pflanzen und/oder Pflanzenteilen die natürlichen Inhaltsstoffe in schonender Weise und in möglichst reiner, d.h. unveränderter/unverfälschter Form zugänglich zu machen. Mit dem erfindungsgemäßen Verfahren kann ebenso die Aufkonzentrierung von Fruchtaromen aus Früchten und Fruchtsäften durchgeführt werden. Die Früchte können danach noch einer Verwertung, z.B. zur Saftproduktion, zugeführt werden. Eine weitere Aufgabe bestand darin, ein Verfahren zu finden, das sich auch auf einen technischen oder halb-technischen Maßstab "upscalen" lässt und die Behandlung größerer, über den Labormaßstab hinausgehender Mengen erlaubt.

Über die Qualitäts- und Quantitätsverbesserung hinaus hat das neue Verfahren noch den weiteren Vorteil, dass Aromen gewonnen werden können, die es bisher noch gar nicht in Naturextraktform gab, z.B. die in der Parfümerie langgesuchten ätherischen Öle von Maiglöckchen, Freesien, Veilchen, Lilien oder Tulpen - oft wurde hier sogar in der Fachwelt behauptet, dass solche Düfte gar nicht gewinnbar seien - oder nur in einer durchaus gebräuchlichen, aber qualitativ unvollkommenen Form erhältlich waren, wie z.B. Quitten-, Pfirsich, Himbeer- oder Erdbeeraromen, welche bei der Saftkonzentration des aus den Früchten gepreßten Saftes gewonnen werden.

Obige und andere Aufgaben sind durch die Erfindung, wie durch die unabhängigen Ansprüche definiert, gelöst. Bevorzugte Ausgestaltungen der Erfindung sind Gegenstand der Unteransprüche oder nachfolgend beschrieben.

Die Erfindung betrifft ein Verfahren zur Gewinnung eines oder mehrerer Pflanzen-Inhaltsstoffe aus Biomaterial wie Pflanzen und/oder Pflanzenteilen durch Extraktion von Aromen aus Biomaterial umfassend zumindest die folgenden Schritte
- Bereitstellen von Biomaterial in einem Extraktor und Durchleiten eines Gasstroms durch das Biomaterial,
- Leiten des Gasstroms in einem Sammelraum über/durch ein Absorptionsmittel
   und/oder
   Einbringen von Wasserdampf in den Extraktor und Kondensation des Gasstroms enthaltend den Wasserdampf im Sammelraum (vorzugsweise dann wenn kein Absorptionsmittel eingesetzt wird),
wobei
- der Druck im Sammelraum größer ist als der Druck im Extraktor, und
   a) der Gasstrom im Kreis geführt wird und von einem Verdichter vom Extraktor in den Sammelraum geführt wird und über zumindest ein Drosselventil vom Sammelraum in den Extraktor zurückgeführt wird oder
   b) der Gasstrom von einem Verdichter vom Extraktor in den Sammelraum geführt wird, wobei über ein Drosselventil Umgebungsluft in den Extraktor gelangt und über zumindest ein weiteres Drosselventil der Gasstrom aus dem Sammelraum an die Umgebung abgegeben wird oder zu einem Teil an die Umgebung abgegeben wird und zu einem anderen Teil in den Extraktor zurückgeführt wird.

Im Folgenden wird das neuartige Verfahren näher beschrieben, mit dem es möglich ist, vorzugsweise von lebenden Pflanzen, von frischen Blüten, frischen Blättern oder Früchten Aromen (umfassend ätherische Öle) originalgetreu und in wirtschaftlich rentabler Ausbeute zu gewinnen. Das Verfahren kann aber auch auf getrocknete Pflanzenmaterialen angewandt werden, z.B. Lavendelblüten, in diesem Fall gibt es mangels Nachproduktion von Duftstoff zwar keine höhere Ausbeute, aber eine wesentlich bessere Qualität.

Bei frischen Pflanzenmaterialien, wie Blüten (z.B. Rosenblüten von diversen Rosenarten, Heliotrop, Hollunder, Linden, Lilien, Freesien, Maiglöckchen, Tulpen, Jasmin, Reseda, Flieder, Primeln, Nachtviolen; Pfingstrosen, Narzissen oder Jonquillen), Blättern (z.B. Zitronenmelisse, Verbena, Lavendel oder Fruchtsalbei) und Früchten (z.B. duftende Pfirsiche, Quitten, Äpfeln, Himbeeren oder Erdbeeren) erreicht das neue Verfahren nicht nur eine wesentlich bessere Qualität des Aromas, sondern gleichzeitig eine wesentlich höhere Ausbeute als alle herkömmlichen Methoden, da insbesondere die fortlaufende Aromaproduktion des Biomaterials während der Extraktion ermöglicht wird.

Das vorliegende Verfahren liefert das Aroma entweder in Reinform, das heißt als konzentriertes naturreines ätherisches Öl oder gebunden an Trägerstoffe, die als Absorptionsmittel eingesetzt werden, wie Wasser, Sirup, Pflanzenöle oder Alkohole, welche in der Kosmetikindustrie, Lebensmittelindustrie, insbesondere in der Getränkeindustrie, aber auch in der Pharmazie Anwendung finden. Mit dem neuen Verfahren können z.B. Duftrosen, deren Aroma in Zukunft eine immer größere Rolle in der Kosmetikindustrie, aber auch in der Aromenindustrie für Lebensmittel und Getränke findet, zunächst extrahiert werden und anschließend entweder getrocknet und als Teebestandteil verkauft werden oder aber auch nach einer relativ kurzen, aber doch rentablen Extraktionszeit noch als Schnittblume verkauft werden, ohne dass die Haltbarkeit dieser Schnittblume wesentlich beeinträchtigt wird.

Nach dem erfindungsgemäßen Verfahren wird ein Gasstrom durch den mit Biomaterial gefüllten Extraktor geleitet. Dabei gibt das Biomaterial Aromastoffe an den Gasstrom ab. Nachfolgend wird der Gasstrom komprimiert und gibt die Aromastoffe durch Kondensation des Wassers und/oder ggf. zusätzlich durch Absorbtion in dem Kondensat ab und der Gasstrom wird erneut in den Gasraum des Extraktors geleitet und somit im Kreislauf geführt.

Nach einer anderen Ausgestaltung wird der Gasstrom nicht im Kreis geführt sondern von einem Verdichter vom Extraktor in den Sammelraum geführt, wobei über ein Drosselventil Umgebungsluft in den Extraktor gelangt und über ein weiteres Drosselventil der Gasstrom aus dem Sammelraum an die Umgebung abgegeben wird. Der Druck im Sammelraum ist auch nach dieser Ausführungsform größer als der Druck im Extraktor. Wenn gewünscht kann ein Teilstrom vom Sammelraum in den Extraktor zurückgeführt werden.

Die Drosselventile sind dabei vorzugsweise so eingestellt, dass sich in dem Sammelraum ein gewählter Druck über dem Umgebungsdruck und in dem Extraktor ein gewählter Druck unter dem Umgebungsdruck (bevorzugt) oder gleich dem Umgebungsdruck ergibt.

Nach einer bevorzugten Ausführungsform ist eine Gaswäsche dem Kondensator nachgeschaltet, womit das Gas zusätzlich absorptiv an einem Absorptionsmittel gebunden wird.

Alle bekannten bei Raumtemperatur flüssigen oder wachsartigen Absorptionsmittel können eingesetzt werden, bevorzugt jedoch Pflanzenöle, Alkohol und (destilliertes) Wasser eignen sich besonders gut. Bevorzugte Absorptionsmittel sind somit ausgewählt aus der Gruppe umfassend Öle, Wachse, Alkohole, Zucker, Wasser und deren Gemische. Das Absorptionsmittel ist vorzugsweise Agavendicksaft oder Zuckersirup. Bevorzugte Pflanzenöle sind Jojobaöl und Mandelöl. Öle im Sinne der vorliegenden Erfindung sind Flüssigkeiten (bei Raumtemperatur), die sich nicht mit Wasser mischen lassen. Wachse werden vorzugsweise aufgeschmolzen. Das Absorptionsmittel weist vorzugsweise einen Siedepunkt von größer 100°C auf.

Die Absorption kann aber auch in einem Gaswäscher oder einer Absorptionskolonne erfolgen, in dem die Absorptionsflüssigkeit umgepumpt wird. Bei Adsorption an Öl wird i.d.R. nach der Extraktion eine Phasentrennung vorgenommen, z.B. mit der aus der Wasserdampfdestillation bekannten Florentinerflasche oder einem anderen Dekanter.

Nach der Ausführungsform ohne Aufgabe von Wasser/Wasserdampf auf das Biomaterial wird, bei Verwendung trockener Gase eine Trocknung des Biomaterials bewirkt, so dass dieses in getrockneter Form vertriebsfähig ist. z.B. als Kräutertee oder Kosmetikrohstoff. Damit wird das biomaterial einer Doppelnutzung zugeführt. Diese Ausführungsform schließt nicht aus, dass das trockene Gas nach dem Passieren des Biomaterials angefeuchtet oder Wasserdampf zugegeben wird.

Nach einer besonders bevorzugten Ausführungsform werden die Aromen in reiner Form gewonnen, z.B. als Ölphase bei der Kondensation des Wasserdampfes.

Der Gasstrom wird insbesondere nach der Kondensation durch das Absorbtionsmittel geleitet, insbesondere feinteilig geperlt, etwa durch eine Glasfritte.

Nach einer anderen Ausführungsform werden im Sammelraum die Aromen kondensiert. Hierzu wird ein zumindest wasserdampfgesättigter Gasstrom eingesetzt. Dieser enthält ggf. eine Vielzahl von Wassertröpfchen in Form eines Nebels. Die Kondensation wird durch den erhöhten Druck und/oder eine Erniedrigung der Temperatur gegenüber dem Extraktor bewirkt. Es ist aber auch möglich, dass keine Kondensation oder die Kondensation zusätzlich stattfindet und sich die Wassertröpfchen des Nebels in der Wasserphase ansammeln und sich Aromen und Wasserphase hierbei dann trennen.

Je nach Art des Biomaterials und Höhe des Drucks kann das Aroma entweder in Reinform, sprich als naturreines ätherisches Öl gewonnen werden oder auch an Wasser, pflanzlichem Öl, Alkohol oder andere Lösungsmittel absorbtiv / adsorbtiv gebunden werden, je nachdem, für welche Zwecke die Aromen eingesetzt werden sollen.

Extraktion im Sinne der vorliegenden Erfindung meint die Abgabe von Aromen an den Gasstrom, unabhängig davon ob die Aromen von dem Gasstrom und/oder etwaigen Tröpfchen aufgenommen bzw. mitgerissen werden.

Der Gasstrom umfasst ein Gas, Wasser in gasförmiger Form, und ggf. gleichzeitig Wasser in flüssiger Form in Form einer Vielzahl an Tröpfchen. Insbesondere besteht der Gasstrom, abgesehen von den durch das Biomaterial aufgenommenen Stoffen, ausschließlich aus dem Gas, Wasser in gasförmiger Form und ggf. zusätzlich Wasser in flüssiger Form in Form einer Vielzahl an Tröpfchen. Es handelt sich somit ggf. um ein Mehrphasensystem, umfassend eine gasförmige und ggf. eine flüssige Phase.

Die Wassertröpfchen können zusätzlich durch einen Vernebler, insbesondere einen Ultraschallvernebler, in dem Exktraktor erzeugt oder in den Exktraktor eingebracht werden.

Das Gas bzw. der Gasstrom kann ein Gasgemisch wie Luft sein. Das Gas ist vorzugsweise ein Inertgas oder Inertgasgemisch, insbesondere Stickstoff oder ein Edelgas wie Argon. Am wirtschaftlichsten ist Stickstoff. Nach einer vorteilhaften Ausführungsform des Verfahrens wird unter weitgehendem Sauerstoffausschluss gearbeitet. Hierzu wird bei Beginn insbesondere das System mit Inertgas gespült, sodass der Sauerstoff durch das Inertgas verdrängt und ausgetrieben wird. Insbesondere wird der Gasstrom und damit die Gasphase überwiegend von gasförmigem Wasser gebildet.

Der Gasstrom wird vorzugsweise von oben nach unten durch das Biomaterial und damit durch den Extraktor geleitet.

Der Gasumlauf wird von einem Verdichter, der wie eine Pumpe arbeitet, bewirkt. Der Druck wird z.B. mittels einer ölfreien Drehschieberpumpe generiert. Durch den Verdichter wird auf der Seite des Sammelraumes für die Aromen ein höherer Druck als auf der Seite des Exktraktors geschaffen. Die Entspannung des im Kreis geführten Gasstroms erfolgt mittels eines Drosselventils. Der entspannte Gasstrom ist nach Verlassen des Sammelraums von Aromen abgereichert. Diese werden zusammen mit dem Kondensat und/oder in/an dem Absorptionsmittel absorbiert bzw. gebunden.

Im Sammelraum ist der Druck höher als im Extraktor. Der Druck auf Seiten des Extraktors beträgt vorzugsweise 1,2 bar oder kleiner. Im Gasraum des Extraktors wird vorzugsweise eine Temperatur zwischen 5°C und 60°C eingestellt, insbesondere 15 bis 30°C und ganz besonders bevorzugt 20 bis 25°C. Der Druck (absolut) im Extraktor beträgt besonders bevorzugt kleiner als 850 mbar, insbesondere 50 bis 150 mbar,

Nach einer anderen Ausführungsform wird im Extraktor etwa Umgebungsdruck eingestellt, insbesondere der Umgebungsdruck des natürlichen Aufwuchsortes des Planzenmaterials.

Im Sammelraum kann die gleiche Temperatur wie im Extraktor eingestellt werden oder eine Temperatur die gegenüber dem Gasraum des Extraktors erniedrigt ist. Hierzu wird insbesondere ein Kühlmedium durch den Sammelraum geleitet.

Der Druck (absolut) im Sammelraum ist als wesentliches Merkmal der Erfindung stets größer als im Gasraum des Extraktors, vorzugsweise beträgt der Druck im Sammelraum größer 1200 mbar bis 50 bar, insbesondere 1,5 bar bis 40 bar und besonders bevorzugt größer 2 bis 5 bar. Es können auch höhere Drücke als 40 bar angewendet werden, die in den allermeisten Fällen jedoch nicht erforderlich sind.

Vorzugsweise beträgt die Temperaturdifferenz zwischen Extraktor und Sammelraum zumindest 10°C, besser zumindest 30°C. Davon unbenommen kann das Absorptionsmittel, das der Kondensation nachgeschaltet ist, erwärmt sein.

Bevorzugt ist es, wenn der Gasstrom im Extraktor vor Passieren des Biomaterials eine relative Luftfeuchtigkeit von 50 und 85 % aufweist, vorzugsweise von 60 und 80%. Die Luftfeuchtigkeit kann z.B. durch Hindurchleiten des Gasstroms durch Wasser im Bereich des Drosselventils eingestellt werden.

Die Apparatur ist vorzugsweise aus druckfestem Glas oder Edelstahl aufgebaut.

Bei der Gewinnung von Aromen können die Früchte nach der Extraktion immer noch zur Saft-, Likör- oder Marmeladenherstellung genutzt werden. Aromen im Sinne der vorliegenden Erfindung umfassen auch ätherische Öle.

Bevorzugt wird in dem erfindungsgemäßen Verfahren mit mindestens einem Detektor quantitativ die Beladung des Gasstroms mit Aromakomponenten bestimmt. Der Detektor ist neben den anderen Mess- und Regelungseinrichtungen in ein Mess-Steuer-Regel-Konzept (MSR-Konzept) eingebunden, welches anhand eines Regelungsalgorithmus den Extraktionsprozess regelt um einen optimierte Prozessfahrweise zu erreichen.

Die Messeinrichtungen umfassen Sensoren oder Detektoren zur Bestimmung der Parameter Druck, Temperatur, Durchfluss, Sauerstoff und Feuchtigkeit des Extraktionsgases. Die gezielte Regelung der Prozessparameter erfolgt z.B. mittels eines PID-Reglers, welcher auf verschiedene Stellarmaturen im Prozess zugreift. Neben der Regelaufgabe kann das MSR-Konzept zudem die Steuerung der einzelnen Prozessschritte hinsichtlich Fluten der Anlage mit Extraktionsgas, Vorevakuierung, Extraktion und Abschaltung nach einem vordefinierten Steuerungszyklus übernehmen und steuert dadurch die Übergänge der einzelnen Prozessschritte. Nach einer vordefinierten Struktur ermöglicht das MSR-Konzept somit die für das Pflanzenmaterial optimalen Prozessbedingungen hinsichtlich maximaler Ausbeute bei minimalem Zeit- und Arbeitsaufwand zu regeln.

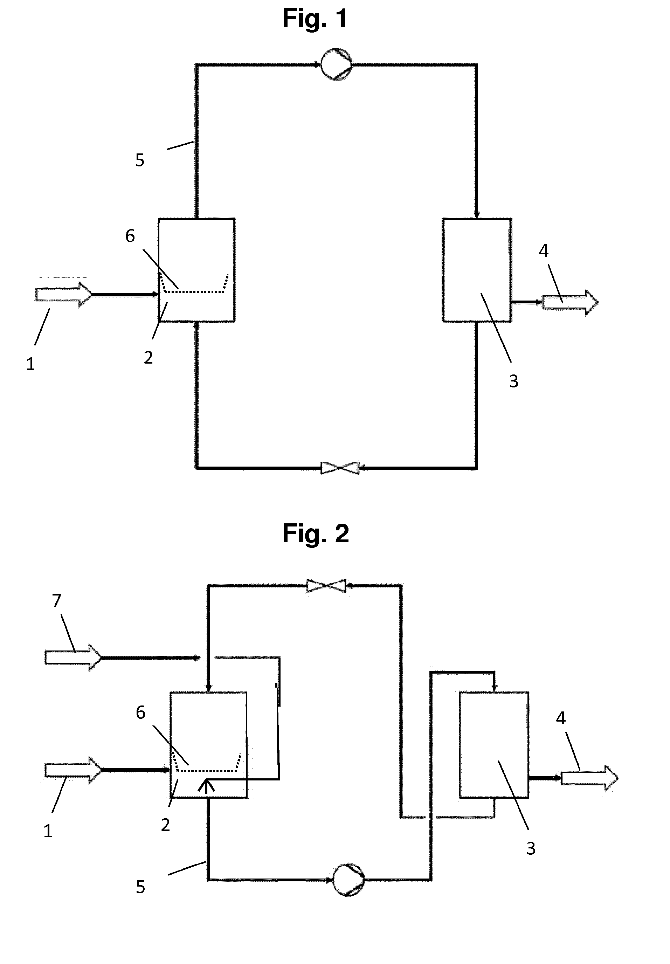

Das Verfahren wird exemplarisch anhand Fig.1 und Fig. 2 erläutert.

Fig. 1 zeigt wie der Gasstrom (5) im Kreislauf über einen Verdichter und ein Drosselventil geführt wird. Das Biomaterial (1) wird in dem Extraktor (2) vorgelegt und ein Unterdruck in dem Extraktor (2) und ein Überdruck im Sammelraum (3) eingestellt. Das Produkt (4), welches ein Kondensat oder das aromatisierte Absorptionsmittel ist, wird batchweise abgeführt.

Fig. 2 zeigt ein Fließschema unter Verwendung der in Fig. 1 gezeigten Elemente, wobei jedoch in den Extraktor Wasserdampf (7) eingebracht wird und der Gasstrom umgekehrt im Kreislauf über einen Verdichter und ein Drosselventil geführt wird. Das Biomaterial (1) wird in einem Korb (6) in dem Extraktor (2) vorgelegt, Wasserdampf (7) unter dem Produkt eingebracht und ein Unterdruck in dem Extraktor (2) und ein Überdruck im Sammelraum (3) eingestellt. Das Produkt (4), welches ein Kondensat oder das aromatisierte Absorptionsmittel ist, wird batchweise abgeführt. Der Gasstrom verlässt den Extraktor am Boden des Gefäßes.

### Versuchsbeschreibung:

### Versuchsbeispiel 1

200 g frisch gepflückte Jasminblüten wurden in ein rohrförmges 3 I Glasgefäß mit einem Einlass im Bodenbereich und einem Auslass im Kopfbereich eingebracht. Das Glasgefäß war im unteren Bereich mit einem Siebboden versehen, auf den die Jasminblüten aufgelegt wurden. Der Auslass ist über ein Rohrsystem mit einer Drehschieberpumpe verbunden, die als Verdichter eingesetzt ist. Zwischen Auslass und Drehschieberpumpe ist über ein T -Stück ein Rundkolben an das Rohrsystem angebunden. In dem Rundkolben sind 200 ml Wasser eingebracht die durch einen Heizpilz zum Sieden gebracht werden.

Glasgefäß, Rohrsystem und Rundkolben bilden den Extraktor. Im Extraktor herrscht ein Druck von etwa Normaldruck. Der Normaldruck wurde durch Stickstoffzugabe in das 3 I Glasgefäß eingestellt. Die Jasminblüten waren Raumtemperatur ausgesetzt, während das Rohrsystem vor der Drehschieberpumpe die Temperatur des siedenden Wasserdampfs hat. An den Extraktor schließt sich der Sammelraum jenseits der Drehschieberpumpe an. Der Sammelraum wies einen Druck von ca. 1,8 bar auf. Der Sammelraum ist mit einem Intensivkühler ausgestattet, der von einem Kühlmedium durchflossen wurde, das mittels Kryostat auf -10°C gekühlt wurde. In der unter dem Intensivkühler angeordneten Rundflasche mit Seitenauslass bildet sich innerhalb von 4 h Stunden etwa 70 g intensiv riechendes Kondensat. Der Gasstrom passiert den Seitenauslass und verlässt über ein Drosselventil den Sammelraum und strömt in den Extraktor etwa unter Normaldruck ein. Die Apparatur ist geschlossen.

### Versuchsbeispiel 2

In einem weiteren Beispiel gemäß Versuchsbeispiel 1 wurde das System mit Inertgas gespült und wie oben betrieben, wonach ebenfalls intensiv riechendes Kondensat erhalten wurde.

### Versuchsbeispiel 3

Um die Abscheidung an Aromen zu erhöhen, wurde in einer weiteren Versuchsdurchführung gemäß Versuchsbeispiel 2 im Sammelraum zusätzlich eine Gaswaschflasche vorgesehen, die zwischen Rundkolben und Drosselventil geschaltet war.

Die Gaswaschflasche war zur Hälfte mit 250 ml Jojobaöl gefüllt, das von dem Gasstrom durchströmt wurde, um zusätzlich den Gasstrom an Aromen abzureichern.

### Versuchsbeispiel 4

30 Duftrosenblüten wurden in einem Korb in den Extraktor positioniert, der Extraktor wies eine Temperatur von 25°C und einen absoluten Druck von 0,6 bar, d.h. Unterdruck, auf. Im System befindet sich Umgebungsluft. Eine Membranpumpe verdichtete den Gasstrom, der in den Sammelraum geführt wird, welcher wie eine Gaswaschflasche aufgebaut ist und den Gasstrom feinperlig durch das Absorbens Agavendicksaft führt. Im Sammelraum befinden sich 250 g Agavendicksaft. Das Aroma der Rosen wurde vom Agavendicksaft aufgenommen, da am Ausgang der Gaswaschflasche ein Drosselventil einen Überdruck von 1,5 bar erzeugt, also ca 2,5 bar absoluter Druck. Im Sammelraum herrscht ebenfalls eine Temperatur von 25 Grad Celsius. Um ein zu starkes Anreichern des Absorbens mit Wasser zu verhindern, wurde dem Sammelraum ein Kondensator vorgeschaltet, dessen Wasserkühlung mittels eines Kryostaten auf 10 °C eingestellt war. Hierdurch wurden sehr geringfügig auch Rosenaromen im Kondensat gebunden, doch es kondensierte hauptsächlich Wasser, welches nach Extraktionsende nur einen schwachen Rosenduft hatte. Der wesentliche Anteil des Rosenaromas wurde im Agavendicksaft gebunden und konnte direkt für das Aromatisieren von Lebensmitteln eingesetzt werden.

## Patentansprüche

1. Verfahren zur Extraktion von Aromen aus Biomaterial umfassend zumindest die folgenden Schritte
• Bereitstellen von Biomaterial in einem Extraktor und Durchleiten eines Gasstroms durch das Biomaterial,
• Leiten des Gasstroms in einem Sammelraum über/durch ein Absorptionsmittel
und/oder
Einbringen von Wasserdampf in den Extraktor und Kondensation des Gasstroms enthaltend den Wasserdampf im Sammelraum,
wobei
• der Druck im Sammelraum größer ist als der Druck im Extraktor, und
c) der Gasstrom im Kreis geführt wird und von einem Verdichter vom Extraktor in den Sammelraum geführt wird und über zumindest ein Drosselventil vom Sammelraum in den Extraktor zurückgeführt wird oder
d) der Gasstrom von einem Verdichter vom Extraktor in den Sammelraum geführt wird, wobei über ein Drosselventil Umgebungsluft in den Extraktor gelangt und über zumindest ein weiteres Drosselventil der Gasstrom aus dem Sammelraum an die Umgebung abgegeben wird oder zu einem Teil an die Umgebung abgegeben wird und zu einem anderen Teil in den Extraktor zurückgeführt wird.

2. Verfahren gemäß Anspruch 1, **dadurch gekennzeichnet, dass** der Wasserdampf in den Extraktor eingebracht wird, nachdem der Gasstrom das Biomaterial passiert hat, insbesondere im Wesentlichen ausschließlich nachdem, zeitlich und örtlich, der Gasstrom das Biomaterial passiert hat.

3. Verfahren gemäß Anspruch 1 oder 2, **dadurch gekennzeichnet, dass** der Wasserdampf im Wesentlichen durch Sieden erzeugt wird.

4. Verfahren gemäß zumindest einem der vorhergehenden Ansprüche, **dadurch gekennzeichnet, dass** neben Wasserdampf Wasser in vernebelter Form, insbesondere durch Ultraschallvernebelung, in den Extraktor eingebracht wird.

5. Verfahren gemäß zumindest einem der vorhergehenden Ansprüche, **dadurch gekennzeichnet, dass** im Sammelraum ein Kühler vorgesehen ist und der Kühler vorzugsweise mit einem Kühlmedium von kleiner 10°C betrieben wird, insbesondere von kleiner 0°C.

6. Verfahren gemäß zumindest einem der vorhergehenden Ansprüche, **dadurch gekennzeichnet, dass** der Gasstrom im Sammelraum durch ein Absorptionsmittel geleitet wird, vorzugsweise nach der Kondensatabscheidung.

7. Verfahren gemäß zumindest einem der vorhergehenden Ansprüche, **dadurch gekennzeichnet, dass** im Extraktor ein Druck unter 1,2 bar eingestellt wird, vorzugsweise kleiner 850 mbar insbesondere 50 bis 150 mbar.

8. Verfahren gemäß zumindest einem der vorhergehenden Ansprüche, **dadurch gekennzeichnet, dass** im Sammelraum ein Druck von 1,5 bar bis 40 bar, insbesondere größer 2 bis 5 bar herrscht.

9. Verfahren gemäß zumindest einem der vorhergehenden Ansprüche, **dadurch gekennzeichnet, dass** im Extraktor vor dem Biomaterial eine relative Luftfeuchtigkeit von 50 und 85 %, vorzugsweise von 60 und 80% des Gasstroms eingestellt wird.

10. Verfahren gemäß zumindest einem der vorhergehenden Ansprüche, **dadurch gekennzeichnet, dass** Extraktor und Sammelraum ein geschlossenes System bilden.

11. Verfahren gemäß zumindest einem der vorhergehenden Ansprüche, **dadurch gekennzeichnet, dass** neben Wasserdampf zusätzlich Alkohole, insbesondere Ethanol, als Dampf/Gas in den Extraktor eingebracht werden, insbesondere durch Sieden und Verdampfen und entsprechend Wasserdampf / Alkohol-Gemische kondensiert werden.

12. Verfahren gemäß einem der vorhergehenden Ansprüche, **dadurch gekennzeichnet, dass** das Verfahren mindestens einen Detektor, bevorzugt einen Infrarot-Detektor und/oder elektrochemischen Detektor, zur Bestimmung der quantitativen Beladung des Gasstroms mit Aromakomponenten enthält.

13. Verfahren gemäß Anspruch 12, **dadurch gekennzeichnet, dass** der Detektor den Druck und/oder die Temperatur im Extraktor und/oder Sammelraum regelt, vorzugsweise den Druck durch Regelung der Drosselventile.

14. Verfahren gemäß zumindest einem der vorhergehenden Ansprüche, **dadurch gekennzeichnet, dass** das Gasgemisch, das das Biomaterial durchströmt, zumindest zum Zeitpunkt des Durchströmens des Biomaterials trocken ist.

15. Verfahren gemäß zumindest einem der vorhergehenden Ansprüche, weiter **kennzeichnet durch** eines oder beide der folgenden Merkmale
a) der Gasstrom aus dem Sammelraum wird gereinigt **durch** Trocknung und/oder Absorption bevor er in den Extraktor geleitet wird und
b) der Gasstrom wird einer Kondensation vor Erreichen des Sammelraums unterzogen, wobei im wesentlichen Wasser kondensiert wird und allenfalls ein geringer Anteil der sich im Absorptionsmittel bindenden Aromen.
